# EUROPEAN PATENT APPLICATION

(11) **EP 4 610 829 A1**
(43) Date of publication of application: **03.09.2025**
(21) Application number: 23890360.3
(22) Date of filing: 04.09.2023
(51) Int. Cl.: G06F 11/07

(54) **FAULT NOTIFICATION METHOD AND RELATED APPARATUS**

(30) Priority: 15.11.2022 CN 202211430806
(71) Applicant: Huawei Technologies Co., Ltd., Shenzhen, Guangdong 518129 (CN)
(72) Inventor: YANG, Juntao, Shenzhen, Guangdong 518129 (CN); KUANG, Zhuqing, Shenzhen, Guangdong 518129 (CN); LI, Ruozhu, Shenzhen, Guangdong 518129 (CN); ZHAO, Yang, Shenzhen, Guangdong 518129 (CN)
(74) Representative: Thun, Clemens
(86) International application number: PCT/CN2023/116700
(87) International publication number: WO 2024/103923

(57) **Abstract**

A fault notification method is provided, and is applied to a node in a storage system. In the method, when an association between a host and the storage system is faulty, the node in the storage system notifies, through another association, the host that a status of the association between the host and the storage system changes, so that the host actively requests the node to obtain association status information, to learn of the faulty association between the host and the storage system in time and switch the association for executing a service, to avoid affecting normal execution of the service.

## Description

This application claims priority to Chinese Patent Application No. 202211430806.5, filed with the China National Intellectual Property Administration on November 15, 2022 and entitled "FAULT NOTIFICATION METHOD AND RELATED APPARATUS", which is incorporated herein by reference in its entirety.

### TECHNICAL FIELD

This application relates to the field of storage technologies, and in particular, to a fault notification method and a related apparatus.

### BACKGROUND

Currently, a plurality of nodes are usually deployed in a storage system based on a non-volatile memory express (NVMe) specification. A host accesses the plurality of nodes in the storage system through a plurality of different associations, to implement redundant access to the storage system and improve service reliability of the storage system.

Generally, the host usually accesses a node in the storage system via a switch. If the switch has a fault detection function, the switch can actively detect whether an association between the host and the node is faulty, and notify the host of a detected faulty association, so that the host quickly switches the communication association.

However, in some cases, if the switch does not have the fault detection function, the host cannot learn in time whether the association between the host and the node is faulty, and continues to send a message to the storage system through a faulty association. As a result, normal execution of a service is affected.

### SUMMARY

This application provides a fault notification method, so that a host that accesses a storage system can learn of a faulty association between the host and the storage system in time, and switch the association for executing a service, to avoid affecting normal execution of the service.

A first aspect of this application provides a fault notification method, applied to a first node in a storage system. The method includes: The first node in the storage system sends, when a first association between a host (host) and the storage system is faulty, a first notification message to the host through a second association that is not faulty. The second association is an association between the first node and the host, and the first notification message is used to describe that a status of an association between the host and the storage system changes, in other words, a status of a path association between the host and the storage system changes from normal to faulty. Simply speaking, an association through which the host accesses the storage system is faulty.

Then, the first node receives a first request message sent by the host in response to the first notification message, where the first request message is used to request to obtain the status of the association between the host and the storage system. The host may send the first request message to the first node through the second association that is not faulty, to ensure that the first node can receive the first request message.

Then, the first node sends a first response message to the host, where the first response message is used to describe that the first association is in a faulty state. Specifically, each association through which the host accesses the storage system may be marked by using a unique identifier, that is, each association has a unique identifier. The first node may include, in the first response message, an identifier corresponding to the first association and status information corresponding to the first association, to describe that the first association is in a faulty state.

In this solution, when an association between the host and the storage system is faulty, a node in the storage system notifies, through an association that is not faulty, the host that a status of the association between the host and the storage system changes. A notification message does not need to notify the host of a specific faulty association. Therefore, a data amount is very small, and the notification can be easily implemented by using a reserved field in an existing communication protocol. Further, after learning that an association fault occurs, the host can actively request association status information from the node to learn of the specific faulty association. The storage system determines, based on the request of the host, information about the specific faulty association, and sends the information to the host. In this way, the host learns of the specific faulty association between the host and the storage system in time. Then, the host may perform fault processing, for example, switch the association for executing a service, to avoid affecting normal execution of the service.

In a possible implementation, the first notification message is an asynchronous event request command completion message (Asynchronous Event Request command Completion), and the asynchronous event request command completion message is used to describe, based on a reserved field value, that the status of the association between the host and the storage system changes.

A current NVMe protocol standard is used as an example. For a field that is in the asynchronous event request command completion message and that is used to describe an asynchronous event type, values 100b to 101b are reserved, that is, specific asynchronous event types corresponding to the values are not defined. Therefore, the asynchronous event request command completion message may be extended to describe that the status of the association between the host and the storage system changes. Specifically, a reserved value in the field indicating the asynchronous event type may be used to describe that the status of the association between the host and the storage system changes. Alternatively, when the asynchronous event request command completion message is used to describe that a current asynchronous event type is a notice event (notice event), for a field that is in the asynchronous event request command completion message and that is used to describe specific information about the notice event, values F1 to FF are reserved for notification of a future NVMe asynchronous event, that is, specific event information corresponding to the values is not defined. Therefore, a reserved value in the field that is used to describe the specific information about the notice event may alternatively be used to describe that the status of the association between the host and the storage system changes.

In general, the existing asynchronous event request command completion message is extended to describe, based on the reserved field value, that the current asynchronous event type is an association status notice event, so that association fault notification can be implemented based on the existing protocol standard.

In this solution, the existing asynchronous event request command completion message is extended to feed back, to the host, that the status of the association between the host and the storage system changes. In this way, modifications to a conventional technology can be reduced as much as possible, and it can be ensured that the storage system and the host implement this solution based on the existing protocol standard, to improve implementability of the solution.

In a possible implementation, the first request message sent by the host to the first node includes a get log page command (get log page command), and the get log page command is used to request to obtain a log page (log page) that records a status of an association between the host and the storage system. The first response message sent by the first node to the host includes a first log page, and the first log page is used to describe that the first association is in a faulty state.

In this solution, the first request message sent by the host to the first node and the response message returned by the first node both are obtained by extending an interaction message in the conventional technology, so that the modifications to the conventional technology can be reduced as much as possible, to ensure the implementability of the solution.

In a possible implementation, the first association is an association between the host and a second node in the storage system. Before the first node sends the first notification message to the host through the second association, the method further includes: The first node receives a second notification message from the second node, where the second notification message is used to describe that the first association is in a faulty state.

In other words, when the first association between the second node and the host is faulty, the second node sends a notification message to the first node, so that the first node assists in notifying the host of the faulty first association. This improves the implementability of the solution.

In a possible implementation, the second notification message is further used to describe a mapping relationship between the first association and the host. That a first node sends a first notification message to the host through a second association includes: The first node sends, through the second association, the first notification message to the host indicated by the mapping relationship.

In a possible implementation, the first association is an association between the host and a second node in the storage system. The first node sends, when learning that the second node is in a faulty state, the first notification message to the host based on a first mapping relationship through the second association, where the first mapping relationship is used to describe a mapping relationship between the second node, the first association, and the host.

In other words, when perceiving that the second node is faulty, the first node can be automatically triggered to send a notification message to the host, to notify the host that the association between the host and the second node is faulty, to ensure that the host can quickly switch the association in time and avoid affecting normal execution of a service.

In a possible implementation, before the first node sends the first notification message to the host through the second association, the method further includes: The first node receives the first mapping relationship sent by the second node.

In this solution, the second node sends the mapping relationship between the second node, the host, and the association to the first node in advance, so that the first node can quickly determine, when the second node is faulty, the affected host and association, to notify the host in time and ensure efficiency of switching the association by the host.

In a possible implementation, the first association is an association between the host and the first node, and the host is associated with the first node separately through the first association and the second association.

In a possible implementation, each association between the host and the storage system corresponds to a logic controller in a node in the storage system.

In a possible implementation, an association between the storage system and the host of an electronic device is based on an NVMe specification.

A second aspect of this application provides a fault notification method, including:

When a first association between a host and a storage system is faulty, the host receives, through a second association between the host and a first node in the storage system, a first notification message sent by the first node, where the first notification message is used to describe that a status of an association between the host and the storage system changes.

The host sends a first request message to the first node, where the first request message is used to request to obtain the status of the association through which the host accesses the storage system.

The host receives a first response message sent by the first node.

When the first response message is used to describe that the first association through which the host accesses the storage system is in a faulty state, the host switches the association for communication with the storage system.

In a possible implementation, the first notification message is an asynchronous event request command completion message, and the asynchronous event request command completion message is used to describe, based on a reserved field value, that the status of the association between the host and the storage system changes.

In a possible implementation, the first request message includes a get log page command, and the get log page command is used to request to obtain a log page that records a status of an association between the host and the storage system. The first response message includes a first log page, and the first log page is used to describe that the first association is in a faulty state.

In a possible implementation, the first association is an association between the host and a second node in the storage system.

In a possible implementation, the first association is an association between the host and the first node, and the host is associated with the first node separately through the first association and the second association.

In a possible implementation, each association between the host and the storage system corresponds to a logic controller in a node in the storage system.

In a possible implementation, an association between the storage system and the host is based on an NVMe specification.

A third aspect of this application provides a node, where the node is a first node in a storage system, and includes:
a sending module, configured to send, when a first association between a host and the storage system is faulty, a first notification message to the host through a second association, where the second association is an association between the first node and the host, and the first notification message is used to describe that a status of an association between the host and the storage system changes; and
a receiving module, configured to receive a first request message sent by the host in response to the first notification message, where the first request message is used to request to obtain a faulty association between the host and the storage system, where
the sending module is further configured to send a first response message to the host, where the first response message is used to describe that the first association is in a faulty state.

In a possible implementation, the first notification message is an asynchronous event request command completion message, and the asynchronous event request command completion message is used to describe, based on a reserved field value, that the status of the association between the host and the storage system changes.

In a possible implementation, the first request message includes a get log page command, and the get log page command is used to request to obtain a log page that records a status of an association between the host and the storage system.

The first response message includes a first log page, and the first log page is used to describe that the first association is in a faulty state.

In a possible implementation, the first association is an association between the host and a second node in the storage system. The receiving module is further configured to receive a second notification message from the second node, where the second notification message is used to describe that the first association is in a faulty state.

In a possible implementation, the second notification message is further used to describe a mapping relationship between the first association and the host. The sending module is further configured to send, through the second association, the first notification message to the host indicated by the mapping relationship.

In a possible implementation, the first association is an association between the host and a second node in the storage system. When the first node learns that the second node is in a faulty state, the sending module is further configured to send the first notification message to the host based on a first mapping relationship through the second association, where the first mapping relationship is used to describe a mapping relationship between the second node, the first association, and the host.

In a possible implementation, the receiving module is further configured to receive the first mapping relationship sent by the second node.

In a possible implementation, the first association is an association between the host and the first node, and the host is associated with the first node separately through the first association and the second association.

In a possible implementation, each association between the host and the storage system corresponds to a logic controller in a node in the storage system.

In a possible implementation, an association between the storage system and the host is based on an NVMe specification.

A fourth aspect of this application provides a host, including:
a receiving module, configured to: when a first association between a host and a storage system is faulty, receive, through a second association with a first node in the storage system, a first notification message sent by the first node, where the first notification message is used to describe that a status of the association through which the host accesses the storage system changes;
a sending module, configured to send a first request message to the first node, where the first request message is used to request to obtain the status of the association through which the host accesses the storage system, where
the receiving module is further configured to receive a first response message sent by the first node; and
a processing module, configured to: when the first response message is used to describe that the first association through which the host accesses the storage system is in a faulty state, switch the association for communication with the storage system.

In a possible implementation, the first notification message is an asynchronous event request command completion message, and the asynchronous event request command completion message is used to describe, based on a reserved field value, that the status of the association between the host and the storage system changes.

In a possible implementation, the first request message includes a get log page command, and the get log page command is used to request to obtain a log page that records a status of an association between the host and the storage system. The first response message includes a first log page, and the first log page is used to describe that the first association is in a faulty state.

In a possible implementation, the first association is an association between the host and a second node in the storage system.

In a possible implementation, the first association is an association between the host and the first node, and the host is associated with the first node separately through the first association and the second association.

In a possible implementation, each association between the host and the storage system corresponds to a logic controller in a node in the storage system.

In a possible implementation, an association between the storage system and the host is based on an NVMe specification.

A fifth aspect of this application provides a storage device, including a storage medium and a processor. The storage medium stores code, the processor is configured to execute the code, and when the code is executed, the storage device performs the method according to any one of the implementations of the first aspect or the second aspect.

A sixth aspect of this application provides a storage system, including a plurality of nodes according to any one of the implementations of the third aspect.

A seventh aspect of this application provides a fault notification system, including the node according to any one of the implementations of the third aspect and the host according to any one of the implementations of the fourth aspect.

An eighth aspect of this application provides a computer storage medium. The computer storage medium stores instructions, and when the instructions are executed by a computer, the computer is enabled to implement the method according to any one of the implementations of the first aspect or the second aspect.

A ninth aspect of this application provides a computer program product. The computer program product stores instructions, and when the instructions are executed by a computer, the computer is enabled to implement the method according to any one of the implementations of the first aspect or the second aspect.

A tenth aspect of this application provides a chip. The chip includes a processor and a communication interface. The communication interface is configured to communicate with a module other than the chip, and the processor is configured to run a computer program or instructions, so that an apparatus in which the chip is installed can perform the method in any one of the implementations of the first aspect or the second aspect.

For technical effects brought by any one of the implementations of the second aspect to the tenth aspect, refer to technical effects brought by the different implementations of the first aspect. Details are not described herein again.

### BRIEF DESCRIPTION OF DRAWINGS

FIG. 1 is a diagram of an application scenario of a fault notification method according to an embodiment of this application;
FIG. 2 is a schematic flowchart of a fault notification method according to an embodiment of this application;
FIG. 3 is another schematic flowchart of a fault notification method according to an embodiment of this application;
FIG. 4 is another schematic flowchart of fault notification according to an embodiment of this application;
FIG. 5 is another schematic flowchart of fault notification according to an embodiment of this application;
FIG. 6 is another schematic flowchart of fault notification according to an embodiment of this application;
FIG. 7 is another schematic flowchart of fault notification according to an embodiment of this application;
FIG. 8 is another schematic flowchart of fault notification according to an embodiment of this application;
FIG. 9 is a diagram of a structure of a node according to an embodiment of this application;
FIG. 10 is a diagram of a structure of a host according to an embodiment of this application;
FIG. 11 is a diagram of a structure of a host according to an embodiment of this application; and
FIG. 12 is a diagram of a structure of a computer-readable storage medium according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein.

Moreover, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

For ease of understanding, the following describes technical terms in embodiments of this application.

### (1) Storage system

The storage system is a system that provides a data storage function. In most storage systems, one or more nodes are configured, where the nodes are physical devices. An external device interacts with the node in the storage system to access data in the storage system. Specifically, when the storage system is a centralized storage system (for example, a storage area network SAN), the node in the storage system is, for example, a storage controller. The storage controller is connected to a storage medium responsible for storing data (for example, a solid-state drive, a magnetic disk, a disk enclosure, or a storage server).

When the storage system is a distributed storage system, the node in the storage system is, for example, a server deployed in a distributed manner. In addition, different servers may store different data, or different servers store same data.

### (2) NVMe

The NVMe is a high-performance and highly scalable storage protocol. An essence of the NVMe is to establish a plurality of paths between a host (host) and a storage device.

The storage system in this application is based on an NVMe interface, and therefore is also referred to as an NVMe subsystem (NVM subsystem).

### (3) Asynchronous event (asynchronous event)

In the NVMe, asynchronous events are defined as some events fed back by the storage system during working to a host that accesses the storage system, to describe some special current working states of the storage system.

### (4) Host

In embodiments, the host may be a device that accesses the storage system to access data in the storage system. The host may be virtual, for example, may be a virtual machine. The host may alternatively be a physical device, for example, may be a device like a personal computer, a server, a notebook computer, a smartphone, or a tablet computer.

The host usually accesses a node in the storage system via a switch. When the host accesses the storage system via a switch with a strong processing capability, the switch may be deployed with a fault detection function, to actively detect whether an association between the host and the node is faulty, and notify the host of a detected faulty association, so that the host quickly switches the communication association.

However, in some cases, if the switch does not have the fault detection function (for example, the switch is an old switch with a weak processing capability), the host cannot learn in time whether the association between the host and the node is faulty, and continues to send a message to the storage system through the faulty association. As a result, normal running of a service is affected. After sending the message to the storage system and receiving no response from the storage system within a specific period of time, the host determines that the association between the host and the storage system is faulty, and switches the communication association. However, the host needs to wait for a long period of time based on a timeout mechanism, and then determines that the association between the host and the storage system is faulty. As a result, communication between the host and the storage system is interrupted for a long period of time, and the normal running of the service is affected.

In view of this, embodiments of this application provide a fault notification method. When an association between a host and a storage system is faulty, a node in the storage system notifies, through another association, the host that a status of the association between the host and the storage system changes, so that the host actively requests the node to obtain association status information, to learn of a faulty association between the host and the storage system in time, to avoid affecting the normal running of the service.

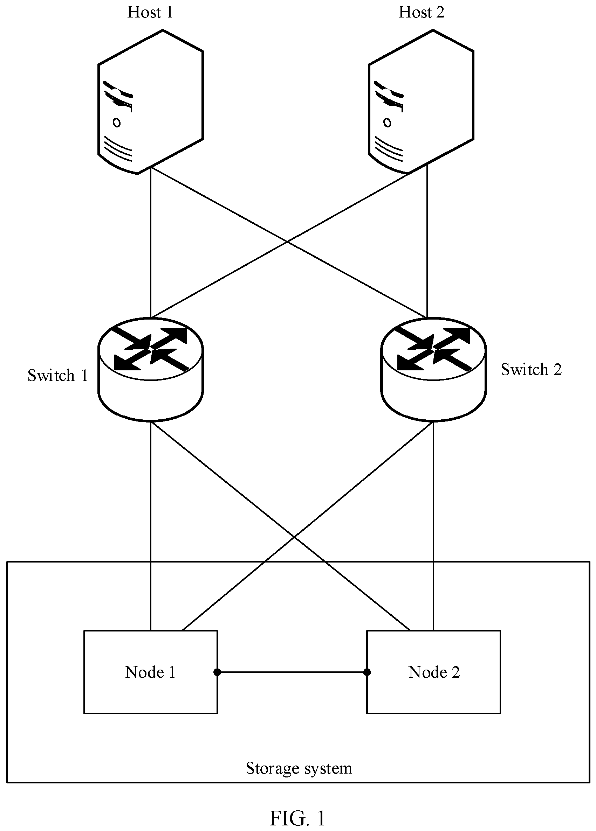

FIG. 1 is a diagram of an application scenario of a fault notification method according to an embodiment of this application. As shown in FIG. 1, a storage system includes a node 1 and a node 2 that are associated with each other. Outside the storage system, a host 1 and a host 2 both are associated with a switch 1 and a switch 2, the switch 1 is associated with both the node 1 and the node 2 in the storage system, and the switch 2 is associated with both the node 1 and the node 2 in the storage system. In other words, for the host 1 and the host 2, either of the two hosts may access any node in the storage system via either of the switch 1 and the switch 2. In other words, the host 1 may access the storage system through four associations, and the host 2 may also access the storage system through four associations. In this application, the host may be a physical host or a virtual machine, and the switch may be a hardware switch or a softswitch.

The host 1 is used as an example. When any association through which the host 1 accesses the storage system is faulty, the node 1 or the node 2 in the storage system may send a notification message to the host 1 through another association between the host 1 and the storage system, to describe that a status of the association through which the host 1 accesses the storage system changes. In this way, the host 1 may return a request message to the node 1 or the node 2 still through the association through which the host 1 receives the notification message, to request to obtain the status of the association between the host 1 and the storage system. Finally, the host 1 determines, by obtaining a response message returned by the node 1 or the node 2, a faulty association through which the host 1 accesses the storage system, and switches data transmitted between the host 1 and the storage system through the faulty association to another association.

It should be noted that, in FIG. 1, two hosts, two switches, and two nodes are used as an example to describe the application scenario of the method provided in this embodiment of this application. In an actual application process, other quantities of hosts, switches, and nodes may be deployed. For example, there may be several, dozens of, or hundreds of hosts, and there may be one or more switches and nodes. However, for a same host, the host accesses the storage system through two or more associations, to implement redundant access to the storage system.

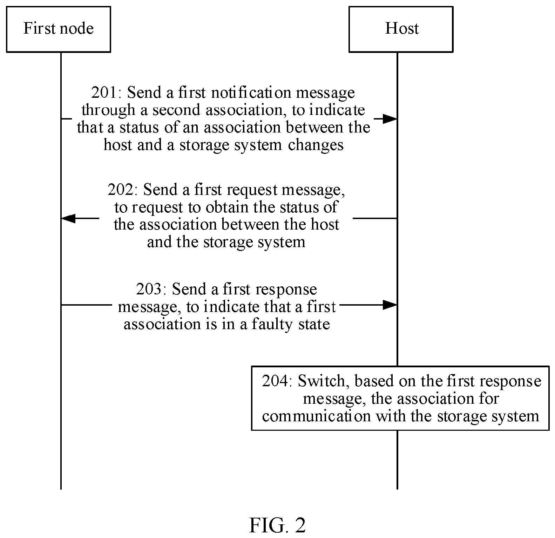

FIG. 2 is a schematic flowchart of a fault notification method according to an embodiment of this application. As shown in FIG. 2, the fault notification method includes the following steps 201 to 204.

Step 201: A first node in a storage system sends, when a first association between a host and the storage system is faulty, a first notification message to the host through a second association, where the second association is an association between the first node and the host, and the first notification message is used to describe that a status of an association between the host and the storage system changes.

Specifically, the first notification message may be sent by a first logic controller in the first node. The faulty first association may be an association between the host and a second logic controller. Optionally, the first logic controller and the second logic controller may be deployed on a same node (for example, the first node). Alternatively, the first logic controller and the second logic controller may be deployed on different nodes. For example, the first logic controller is deployed on the first node, and the second logic controller is deployed on a second node.

The first node may be an apparatus that is in the storage system and that is configured to process a data access request. The first node can return corresponding data in the storage system to the host based on a data access request sent by the host, or store data based on a write request of the host.

In this embodiment, the host accesses the storage system through the first association and the second association, the first association between the host and the storage system is faulty, and the second association between the host and the storage system is not faulty.

Generally, a node in the storage system establishes a communication association with the host via a network interface card (network interface card, NIC). An association fault in this application includes three cases: (1) The network interface card for establishing the communication association between the node and the host is faulty. (2) A wired or wireless communication channel between the node and a switch or the host is faulty. (3) A logic controller is faulty, where the logic controller being faulty herein does not mean that the logic controller completely cannot be used, but merely means that the logic controller cannot communicate with the host through an association, but remaining functions can still be retained.

Specifically, the logic controller runs in a storage controller in a centralized storage (to distinguish from a physical controller, a controller in the centralized storage is referred to as a storage controller, and a control function that runs in the storage controller and that is implemented by software is referred to as a logic controller). Alternatively, the logic controller runs in a server of a distributed storage system. Each logic controller has an IP, and corresponds to a wireless or wired physical network interface.

The first association is an association between the host and the first logic controller of the storage system, and the second association is an association between the same host and the second logic controller of the storage system. The storage system includes the first node and the second node. The first logic controller and the second logic controller both are located on the first node of the storage system. Alternatively, the first logic controller and the second logic controller are respectively located on the second node and the first node of the storage system.

According to the solution of this application, by obtaining a status of the network interface card in real time, the node may quickly learn of a status of an association between the node and the host, in other words, determine whether the association between the node and the host is faulty. When the network interface card is faulty or the communication channel between the network interface card and the switch or the host is faulty, the network interface card feeds back a faulty state. Therefore, the node can determine the status of the association between the node and the host by obtaining the status of the network interface card.

In addition, each association between the host and the storage system corresponds to a logic controller in a node in the storage system. Specifically, one node may include one or more logic controllers, and each logic controller is responsible for one association between the node and the host. The logic controller in the node is implemented by software, and is responsible for implementing data interaction between the host and the storage system. In this way, the host can implement the data interaction with the storage system by accessing the storage system through any association.

The first node sends, when the first association between the host and the storage system is faulty, the first notification message to the host through the second association that is not faulty, to describe that a status of the association between the host and the storage system changes, in other words, the association between the host and the storage system is faulty.

Step 202: The host sends a first request message to the first node, where the first request message is used to request to obtain the status of the association between the host and the storage system.

Specifically, the host sends the first request message to the first logic controller in the first node through the second association.

In this step, the host may return the first request message to the first node still through the association through which the host receives the first notification message sent by the first node. In other words, the host sends the first request message to the first node through the second association that is not faulty, to ensure that the first node can receive the first request message.

Step 203: The first node sends a first response message to the host, where the first response message is used to describe that the first association is in a faulty state.

Specifically, the first logic controller in the first node sends the first response message to the host through the second association.

Based on the received first request message, the first node may learn that, by querying a faulty association record in the storage system or querying a status of each association, the first association is faulty. Therefore, the first node sends the first response message to the host. The first response message may carry current statuses (faulty or normal) of all associations between the host and the storage system, and different associations are distinguished by using different identifiers. Alternatively, the first response message carries an identifier of a faulty association between the host and the storage system, and does not carry an identifier of a normal association. Specifically, each association through which the host accesses the storage system may be marked by using a unique identifier, that is, each association has a unique identifier. The first node may include, in the first response message, an identifier corresponding to the first association and status information corresponding to the first association, to describe that the first association is in a faulty state.

Step 204: The host switches, based on the first response message, the association for communication with the storage system.

Specifically, the host switches from the first association between the host and the second logic controller to an association (for example, the second association or a third association) between the host and another controller.

Specifically, when originally communicating with the storage system through the first association (for example, requesting to access data in the storage system through the first association), the host determines, based on the first response message, that the first association is faulty, and therefore switches the association for the communication with the storage system. For example, the host switches from the first association for the communication with the storage system to the second association. For another example, when there is another association other than the first association and the second association between the host and the storage system, the host may alternatively switch from the association for the communication with the storage system to the another association. This is not specifically limited in this embodiment.

In this embodiment, when an association between the host and the storage system is faulty, a node in the storage system notifies, through an association that is not faulty, the host that a status of the association between the host and the storage system changes. A notification message does not need to notify the host of a specific faulty association. Therefore, a data amount is very small, and the notification can be easily implemented by using a reserved field in an existing communication protocol. Further, after learning that an association fault occurs, the host can actively request association status information from the node to learn of the specific faulty association. The storage system determines, based on the request of the host, information about the specific faulty association, and sends the information to the host. In this way, the host learns of the specific faulty association between the host and the storage system in time. Then, the host may perform fault processing, for example, switch the association for executing a service, to avoid affecting normal execution of the service.

It should be noted that, it can be learned from the foregoing steps 201 to 204 that an operation performed by a node is actually performed by a specific logic controller. Similarly, in other embodiments, unless otherwise specified, an operation performed by a node is also specifically performed by a logic controller in the node.

Optionally, in this embodiment, an association between the storage system and the host is based on an NVMe specification. In addition, the storage system may alternatively interact with the host according to another protocol. This is not limited in this embodiment.

Generally, the storage system and the host communicate with each other by complying with a specified protocol standard, to implement interaction of various data and status information between the storage system and the host. To facilitate implementation of the fault notification method provided in this embodiment of this application based on the existing protocol standard, in this embodiment, the fault notification method in this embodiment may be implemented based on an interaction message defined in the existing protocol standard.

Specifically, in the protocol standard for interaction between the storage system and the host, a node in the storage system may feed back an asynchronous event to the host by sending an asynchronous notification message to the host, to notify the host of a current software status, an error, and running status information.

For example, NVMe is used as an example. Types of asynchronous events and representing values of different types of asynchronous events in an asynchronous event request command completion message are shown in Table 1.

**Table 1**

| Representing value | Type |
|---|---|
| 000b | Error event (error event) |
| 001b | Smart/Health status event (SMART/health status event) |
| 010b | Notice event (notice event) |
| 100b to 101b | Reserved (reserved) |
| 110b | I/O command specific status event (I/O command specific status event) |
| 111b | Vendor specific event (vendor specific event) |

As shown in Table 1, in the asynchronous event request command completion (asynchronous event request command completion) message, different types of asynchronous events are described by using different representing values. The error event is used to describe a common error irrelevant to a specific command. The smart/health status event is used to describe an event related to a smart/health status. The notice event is used to describe a common event. In general, in the asynchronous event request command completion message, different types of asynchronous events can be fed back to the host by using different representing values.

In addition, in the current protocol standard, for a field that is in the asynchronous event request command completion message and that is used to describe an asynchronous event type, values 100b to 101b are reserved, that is, specific asynchronous event types corresponding to the values are not defined. Therefore, a reserved value in the field that is used to describe the asynchronous event type may be used to describe that the status of the association between the host and the storage system changes.

In addition, in addition to the field used to describe the asynchronous event type, the asynchronous event request command completion message further includes another field used to describe specific information about an asynchronous event. For example, when being used to describe, by using a 1^{st} field, that a current asynchronous event is the notice event, the asynchronous event request command completion message is further used to describe specific information about the notice event by using a 2^{nd} field.

For example, when the asynchronous event request command completion message is used to describe, by using the 1^{st} field, that the current asynchronous event is the notice event, representing values of the field used to describe the specific information about the notice event and representing content corresponding to each representing value are shown in Table 2.

**Table 2**

| Representing value | Representing content |
|---|---|
| 04 | Represents event pending entries for one or more NVM sets |
| 05 | LBA status information alert |
| 06 | Represents that event entries for one or more endurance groups have been added to an endurance group event aggregate log |
| 07 to EE | Reserved |
| EF | Region descriptor has been changed. |
| F0 | Discovery log page changes: One or more discovery log pages have changed. |
| F1 to FF | Reserved for notification of a future NVMe asynchronous event |

As shown in Table 2, when the asynchronous event request command completion message is used to describe that a current asynchronous event type is the notice event (notice event), for the field that is in the asynchronous event request command completion message and that is used to describe the specific information about the notice event, values F1 to FF are reserved for notification of a future NVMe asynchronous event. Therefore, a reserved value in the field that is used to describe the specific information about the notice event may alternatively be used to describe that the status of the association between the host and the storage system changes.

In conclusion, in this embodiment, the existing asynchronous event request command completion message may be extended to describe, based on a reserved field value, that the current asynchronous event type is an association status notice event, so that association fault notification can be implemented based on the existing protocol standard.

It should be specially noted that, considering that a quantity of bytes that can be carried in an extension field for extending the asynchronous event request command completion is limited, in this embodiment of this application, a specific faulty association is not directly fed back by using the message, but a prompt (the first notification message), indicating that a status of the association between the host and the storage system changes, for example, the status changes from normal to abnormal, is fed back. Then, the host sends another request (the first request message), to query the storage system for the specific faulty association.

For example, in the foregoing step 201, the first notification message sent by the first node to the host may be an asynchronous event request command completion message, and the asynchronous event request command completion message is used to describe, based on the reserved field value, that the status of the association between the host and the storage system changes. For example, when the storage system is an NVMe-based storage system, for the field that is in the asynchronous event request command completion message and that is used to describe the asynchronous event type, the asynchronous event request command completion message may be used to describe, based on any value in 100b to 101b, that the status of the association between the host and the storage system changes. Alternatively, when the asynchronous event request command completion message is used to describe that the current asynchronous event type is the notice event (notice event), for the field that is in the asynchronous event request command completion message and that is used to describe the specific information about the notice event, the asynchronous event request command completion message may be used to describe, based on any value in F1 to FF, that the status of the association between the host and the storage system changes.

In this solution, the existing asynchronous event request command completion message is extended to feed back, to the host, that the status of the association between the host and the storage system changes. In this way, modifications to a conventional technology can be reduced as much as possible, and it can be ensured that the storage system and the host implement this solution based on the existing protocol standard, to improve implementability of the solution.

Optionally, when the first notification message is obtained by extending the asynchronous event request command completion message in the conventional technology, the first request message sent by the host to the first node and the response message returned by the first node may also be obtained by extending an interaction message in the conventional technology, to reduce the modifications to the conventional technology as much as possible to ensure the implementability of the solution.

For example, the first request message sent by the host to the first node includes a get log page command (get log page command), and the get log page command is used to request to obtain a log page (log page) that records a status of an association between the host and the storage system. For example, in this embodiment, a get log page command used to request to obtain association status information may be obtained by extending an existing get log page command in an NVMe protocol standard.

The first response message sent by the first node to the host includes a first log page, and the first log page is used to describe that the first association is in a faulty state. Specifically, the first log page may be a log page used by the first node for recording. The first log page may be used to record an association through which the host accesses the storage system and whose status changes and a status of the association after the change. That is, the first log page records that the first association is in a faulty state. Alternatively, the log page may record current statuses of all associations through which the host accesses the storage system. In conclusion, after obtaining the first log page, the host can determine that the first association is currently in a faulty state.

For example, the first log page in the first response message sent by the first node to the host may be shown in Table 3 and Table 4.

**Table 3**

| Byte | Description |
|---|---|
| 03:00 | Quantity of associations |
| 07:04 | 1^{st} piece of association information |
| 0b:08 | 2^{nd} piece of association information |
| ... | ... |

As shown in Table 3, in the first log page, a 0^{th} byte to a 3^{rd} byte are used to describe a quantity of associations included in the first log page, namely, a quantity of associations that need to be parsed and processed by the host. A 4^{th} byte to a 7^{th} byte are used to describe the 1^{st} piece of association information recorded in the first log page, and an 8^{th} byte to an 11^{th} byte are used to describe the 2^{nd} piece of association information recorded in the first log page. The rule applies. Each subsequent four bytes are used to describe one piece of association information recorded in the first log page. Each piece of association information recorded in the first log page includes an association identifier and an association status.

For example, a specific representation manner of each piece of association information in Table 3 may be shown in Table 4.

**Table 4**

| Byte | Description | |
|---|---|---|
| 01:00 | Association identifier | |
| 03:02 | Association status | |
| | Representing value | Description |
| | 0 | Normal |
| | 1 | Faulty |
| | Another value | Reserved |

As shown in Table 4, each piece of association information is represented by four bytes. Therefore, in each piece of association information, a 0^{th} byte and a 1^{st} byte are used to describe an association identifier, and a 2^{nd} byte and a 3^{rd} byte are used to describe an association status. When a value represented by the 2^{nd} byte and the 3^{rd} byte is 0, it indicates that the association status is normal. When a value represented by the 2^{nd} byte and the 3^{rd} byte is 1, it indicates that the association status is faulty. In addition, another value represented by the 2^{nd} byte and the 3^{rd} byte is used as a reserved value, to facilitate subsequent extension of another use.

After obtaining the first log page that describes the association status by using the foregoing Table 3 and Table 4, the host may parse the first log page, and compare an association status stored in the host with the association described in the first log page. For any association, if finding that the association status stored in the host is normal, but the association status described in the first log page is faulty, the host determines that the association is faulty, and then switches to another association to communicate with the storage system.

The foregoing describes a specific process in which the node notifies the host of the association status after the association between the host and the storage system is faulty. Because association manners the host and the storage system may be different in different cases, the following describes in detail how the node notifies the host of the association status in various manners between the host and the storage system.

Implementation 1: The host accesses a same node through a plurality of associations, and some associations through which the host accesses the node are faulty, so that the node notifies the host through another normal association.

For example, the host accesses a same node in the storage system through two associations. When one association is faulty, the node may notify the host through the other normal association. In addition, the host may alternatively access a same node through more than two associations. A quantity of associations through which the host accesses the node is not limited in this embodiment.

For example, in the embodiment shown in FIG. 2, the first association may be an association between the host and the first node, and the host is associated with the first node separately through the first association and the second association. In this way, when the first association between the host and the first node is faulty, the host may send the first notification message to the host through the normal second association.

Optionally, in a working process of the first node, the first node may determine, based on a communication apparatus being in a faulty state, that the first association is faulty. The communication apparatus is an apparatus that is in the first node and that is responsible for communication with the host through the first association. For example, the communication apparatus is a network interface card.

Simply speaking, the first node may establish different associations with the host via different network interface cards, and the first node may determine, by monitoring a status of a network interface card in real time, whether an association corresponding to the network interface card is faulty. When a network interface card responsible for communication with the host through the first association feeds back a faulty state (for example, the network interface card is powered off or reset, or a network cable connected to the network interface card is disconnected), the first node may determine that the first association is faulty, and send the first notification message to the host through the second association.

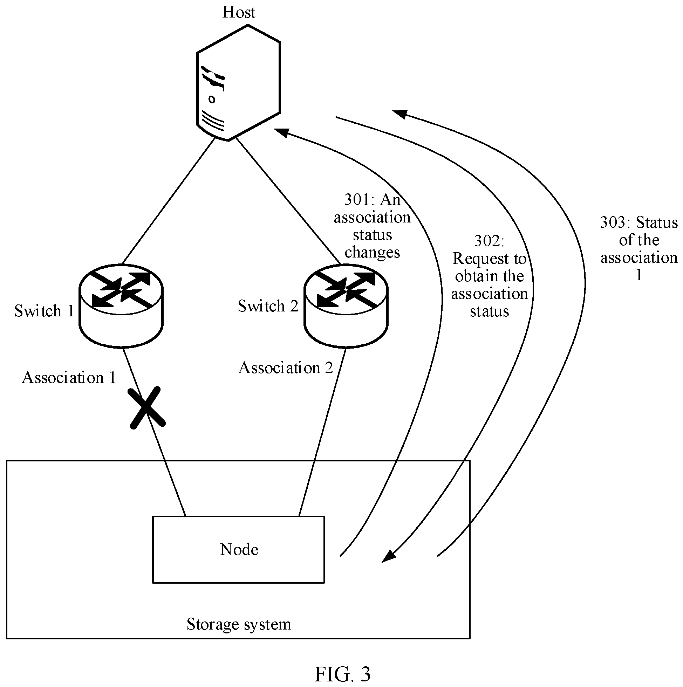

For example, FIG. 3 is another schematic flowchart of fault notification according to an embodiment of this application. As shown in FIG. 3, a storage system includes a node, and the node establishes associations with a host separately via a switch 1 and a switch 2. An association 1 established by the node with the host via the switch 1 is faulty, and an association 2 established by the node with the host via the switch 2 is normal.

In FIG. 3, the node in the storage system may correspond to, for example, the first node in the embodiment shown in FIG. 2, the association 1 may correspond to the first association in the embodiment shown in FIG. 2, and the association 2 may correspond to the second association in the embodiment shown in FIG. 2. A fault notification procedure shown in FIG. 3 includes the following steps 301 to 303.

Compared with the embodiment described in FIG. 2, the embodiment described in FIG. 3 differs in that the host accesses the same node through two associations, and if one association through which the host accesses the node is faulty, the node notifies the host through the other normal association.

Step 301: When the association 1 is faulty, the node sends a first notification message to the host through the association 2, to notify the host that an association status of the host changes. Specifically, a first logic controller in the first node may send the first notification message to the host through the association 2.

For example, when detecting that a network interface card corresponding to the association 1 is faulty, but a network interface card corresponding to the association 2 is normal, the node is triggered to send the first notification message to the host through the association 2. For example, for the first notification message, refer to descriptions in the embodiment shown in FIG. 2.

Step 302: After receiving the first notification message, the host sends a first request message to the node through the association 2, to request to obtain the status of the association between the host and the storage system.

Specifically, step 302 is similar to the foregoing step 202. For details, refer to the foregoing step 202. Details are not described herein again.

Step 303: The node sends a first response message to the host through the association 2, to describe the status of the association 1.

Specifically, the first logic controller in the node may send the first response message to the host through the association 2, where the first response message is used to describe that the association 1 is in a faulty state. In this way, after receiving the first response message, the host may determine that the association 1 is faulty, and then switch to the association 2 to perform subsequent data communication with the storage system.

Implementation 2: The host accesses a plurality of different nodes, and an association through which the host accesses a node is faulty, so that the node notifies another node, and the another node notifies the host through a normal association.

Simply speaking, when the host accesses a plurality of different nodes, and an association between a node and the host is faulty, the node notifies the host through another node.

Generally, there is a reliable communication association between different nodes in a same storage system. For example, when two nodes in the storage system are deployed at a short distance (for example, a distance of several meters), the two nodes may be interconnected through a high-speed bus, to implement high-speed communication between the two nodes. For another example, when two nodes in the storage system are deployed at a long distance, the two nodes may be interconnected through a private line network, to implement high-speed communication between the two nodes. In general, when an association between a node and the host is faulty, the node can quickly notify another node, and the another node notifies the host that the association status changes.

For example, in the embodiment shown in FIG. 2, the first association is an association between the host and the second node in the storage system. In addition, before the first node sends the first notification message to the host through the second association, the first node receives a second notification message from the second node, where the second notification message is used to describe that the first association is in a faulty state.

In other words, the first node receives the second notification message from the second node, where the second notification message is used to describe that the first association is in a faulty state, so that the first node is triggered to send the first notification message to the host, to describe that the status of the association between the host and the storage system changes.

Optionally, because the first node may be associated with a plurality of different devices, to enable the first node to determine a specific device associated with the storage system through the first association, the second notification message may be further used to describe a mapping relationship between the first association and the host, in other words, describe that the first association corresponds to the host. In this way, the first node may determine the host based on the mapping relationship, and send the first notification message to the host through the second association.

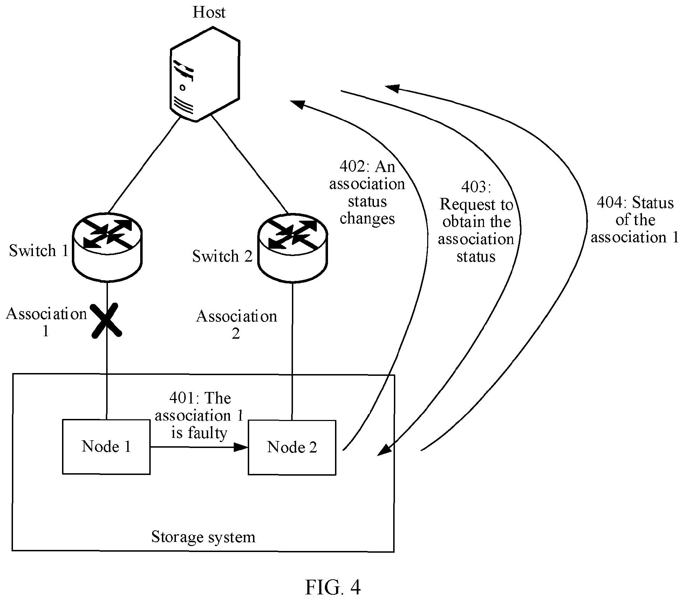

For example, FIG. 4 is another schematic flowchart of fault notification according to an embodiment of this application. As shown in FIG. 4, a storage system includes a node 1 and a node 2, the node 1 establishes an association with a host via a switch 1, and the node 2 establishes an association with the host via a switch 2. An association 1 established by the node 1 with the host via the switch 1 is faulty, and an association 2 established by the node 2 with the host via the switch 2 is normal.

In FIG. 4, the node 1 in the storage system may correspond to, for example, the second node in the embodiment shown in FIG. 2, the node 2 in the storage system may correspond to, for example, the first node in the embodiment shown in FIG. 2, the association 1 may correspond to the first association in the embodiment shown in FIG. 2, and the association 2 may correspond to the second association in the embodiment shown in FIG. 2. A fault notification procedure shown in FIG. 4 includes the following steps 401 to 404.

Compared with the embodiment described in FIG. 2/FIG. 3, the embodiment described in FIG. 4 differs in that the host accesses the node 1 and the node 2, and the association 1 through which the host accesses the node 1 is faulty, so that the node 1 notifies the node 2, and the node 2 notifies the host through the normal association 2.

Step 401: When the association 1 is faulty, the node 1 sends a second notification message to the node 2, to describe that the association 1 is faulty. Specifically, the association 1 corresponds to a second logic controller, and the second logic controller of the node 1 sends the second notification message to a first logic controller of the node 2.

The second notification message may carry an identifier of the association 1 and an identifier of the host, to describe that a faulty association is the association 1 and a device corresponding to the association 1 is the host.

Step 402: The node 2 sends a first notification message to the host through the association 2, to notify the host that an association status of the host changes. Specifically, the first logic controller of the node 1 may send the first notification message to the host.

Step 403: After receiving the first notification message, the host sends a first request message to the node 2 through the association 2, to request to obtain the status of the association between the host and the storage system.

Specifically, steps 402 and 403 are similar to the foregoing steps 201 and 202. For details, refer to the foregoing steps 201 and 202. Details are not described herein again.

Step 404: The node 2 sends a first response message to the host through the association 2, to describe the status of the association 1.

In this way, after receiving the first response message, the host may determine that the association 1 is faulty, and then switch to the association 2 to perform subsequent data communication with the node 2 in the storage system. For example, the host accesses data in the storage system through the node 2.

In the embodiment shown in FIG. 4, the node 1 establishes an association with the host through one association, and after the association between the node 1 and the host is faulty, the node 2 notifies the host. In some embodiments, a plurality of associations may be established between a same node and the host. The node may notify another node when all the associations between the node and the host are faulty, and the another node notifies the host.

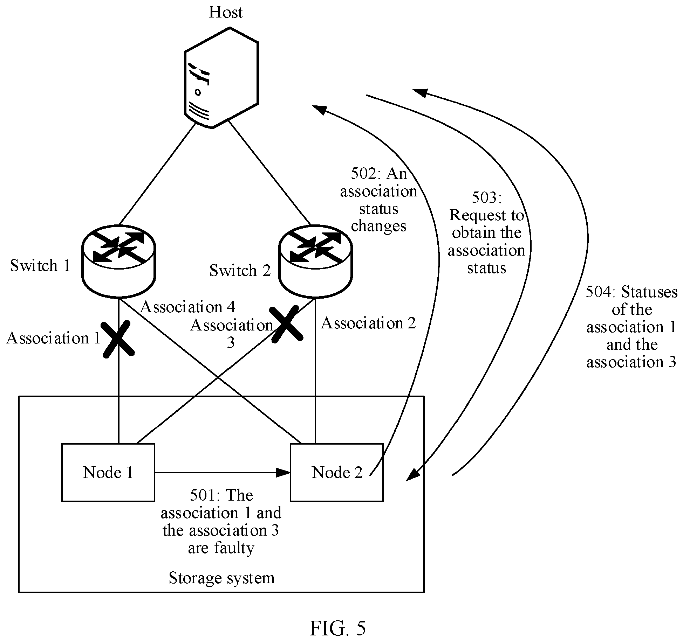

For example, FIG. 5 is another schematic flowchart of fault notification according to an embodiment of this application. As shown in FIG. 5, a storage system includes a node 1 and a node 2, the node 1 establishes associations with a host separately via a switch 1 and a switch 2, and the node 2 establishes associations with the host separately via the switch 1 and the switch 2. An association 1 established by the node 1 with the host via the switch 1 is faulty, and an association 3 established by the node 1 with the host via the switch 2 is faulty. An association 2 established by the node 2 with the host via the switch 2 is normal, and an association 4 established by the node 2 with the host via the switch 1 is also normal.

In FIG. 5, the node 1 in the storage system may correspond to, for example, the second node in the embodiment shown in FIG. 2, the node 2 in the storage system may correspond to, for example, the first node in the embodiment shown in FIG. 2, the association 1 or the association 3 may correspond to the first association in the embodiment shown in FIG. 2, and the association 2 or the association 4 may correspond to the second association in the embodiment shown in FIG. 2. A fault notification procedure shown in FIG. 5 includes the following steps 501 to 504.

Compared with the embodiment described in FIG. 2 (or FIG. 3/FIG. 4), the embodiment described in FIG. 5 differs in that the host is associated with the node 1 and the node 2 separately through a plurality of associations, and each of a plurality of associations between the host and the node 1 is faulty, so that the node 1 notifies the node 2, and the node 2 notifies the host through the normal association 2 or association 4.

Step 501: When the association 1 is faulty, the node 1 sends a second notification message to the node 2, to describe that the association 1 and the association 3 are faulty. Specifically, the association 1 corresponds to a second logic controller, and the second logic controller of the node 1 sends the second notification message to a first logic controller of the node 2.

The second notification message may carry an identifier of the association 1, an identifier of the association 3, and an identifier of the host, to describe that faulty associations are the association 1 and the association 3, and a device corresponding to the association 1 and the association 3 is the host.

Step 502: The node 2 sends a first notification message to the host through the association 2, to notify the host that an association status of the host changes. Specifically, the first logic controller of the node 1 may send the first notification message to the host.

In addition, the node 2 may alternatively send the first notification message to the host through the association 4, in other words, the node 2 may notify the host through any normal association between the node 2 and the host. An association through which the node 2 notifies the host is not limited in this embodiment.

Step 503: After receiving the first notification message, the host sends a first request message to the node 2 through the association 2, to request to obtain the status of the association between the host and the storage system.

Specifically, steps 502 and 503 are similar to the foregoing steps 201 and 202. For details, refer to the foregoing steps 201 and 202. Details are not described herein again.

Step 504: The node 2 sends a first response message to the host through the association 2, to describe the statuses of the association 1 and the association 3.

In this way, after receiving the first response message, the host may determine that the association 1 and the association 3 both are faulty, and then switch to the association 2 or the association 4 to perform subsequent data communication with the node 2 in the storage system. For example, the host accesses data in the storage system through the node 2.

In the embodiment shown in FIG. 5, it is described that when an association between one node and one host is faulty, another node notifies the host of the association status. In some embodiments, associations between one node and a plurality of hosts may all be faulty. In this case, another node needs to notify the hosts that association statuses change.

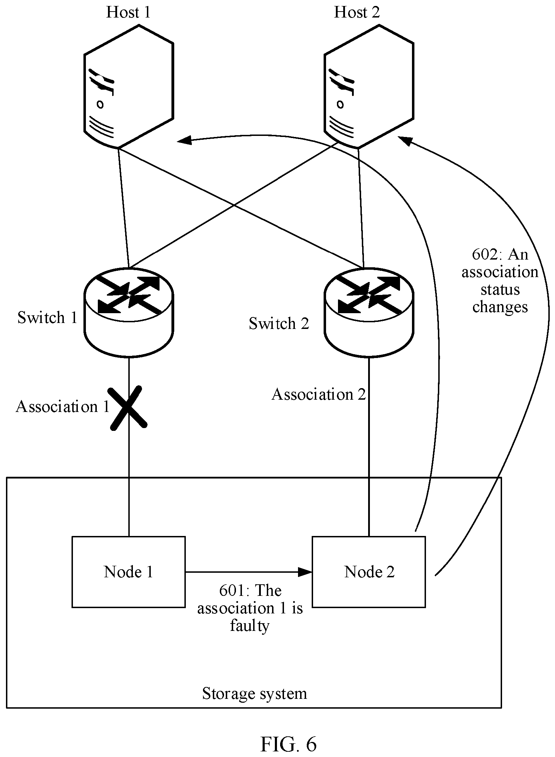

For example, FIG. 6 is another schematic flowchart of fault notification according to an embodiment of this application. As shown in FIG. 6, a storage system includes a node 1 and a node 2, and the node 1 establishes associations with a host 1 and a host 2 via a switch 1. The node 2 establishes associations with the host 1 and the host 2 via a switch 2. An association 1 for establishing the associations with the host 1 and the host 2 by the node 1 via the switch 1 is faulty, and an association 2 for establishing the associations with the host 1 and the host 2 by the node 2 via the switch 2 is normal. A fault notification procedure shown in FIG. 6 includes the following steps 601 and 602.

Compared with the embodiments described in FIG. 2 to FIG. 5, the embodiment described in FIG. 6 differs in that the host 1 and the host 2 both access the node 1 and the node 2, and both the association between the host 1 and the node 1 and the association between the host 2 and the node 1 are faulty, so that the node 1 notifies the node 2, and the node 2 notifies the host 1 and the host 2 through a normal association.

Step 601: When the association 1 is faulty, the node 1 sends a second notification message to the node 2, to describe that the association between the node 1 and the host 1 and the association between the node 1 and the host 2 are faulty. Specifically, a second logic controller in the node 1 may send the second notification message to a second logic controller in the node 2.

In this embodiment, the association 1 may be an association between the node 1 and the switch 1. When the association 1 is faulty, both the association between the node 1 and the host 1 and the association between the node 1 and the host 2 are faulty. The node 1 may use different association identifiers to represent the association between the node 1 and the host 1 and the association between the node 1 and the host 2. For example, the association between the node 1 and the host 1 may be represented as an association 1.1, and the association between the node 1 and the host 2 may be represented as an association 1.2. In this way, the second notification message sent by the node to the node 2 may be used to describe that the association 1.1 and the association 1.2 are faulty, and describe a mapping relationship between the association 1.1 and the host 1, and a mapping relationship between the association 1.2 and the host 2.

Step 602: The node 2 separately sends a notification message to the host 1 and the host 2 through the association 2, to notify the host 1 and the host 2 that association statuses of the host 1 and the host 2 change.

Specifically, a first logic controller in the node 2 may send the notification message to the host 1 and the host 2.

In this way, after receiving the notification message, the host 1 and the host 2 may separately send a request message to the node 2, to request to obtain the association status. The node 2 may send a response message 1 to the host 1, to describe that the association 1.1 between the host 1 and the node 1 is faulty. The node 2 may further send a response message 2 to the host 2, to describe that the association 1.2 between the host 2 and the node 1 is faulty.

In general, when associations between the node 1 and a plurality of hosts are faulty, the node 2 may separately notify the hosts, to describe that the associations between the hosts and the node 1 are faulty, so that the hosts switch the communication associations.

Implementation 3: The host accesses a plurality of different nodes, a node accessed by the host is faulty (that is, all associations through which the host accesses the node are faulty), and another node notifies the host through a normal association.

In Implementation 3, when a node is faulty, all associations between the node and the host are faulty. In this case, another node notifies the host through a normal association.

For example, in the embodiment shown in FIG. 2, the first association is an association between the host and the second node in the storage system. A first node sends, when learning that the second node is in a faulty state, a first notification message to the host based on a first mapping relationship through a second association. The first mapping relationship is used to describe a mapping relationship between the second node, the first association, and the host. In other words, the first mapping relationship is used to describe that an association is established between the second node and the host through the first association.

Optionally, the first mapping relationship may be pre-deployed in the first node. Alternatively, the first mapping relationship may be sent by the second node to the first node in advance. For example, before the first node sends the first notification message to the host through the second association, the first node receives the first mapping relationship sent by the second node.

In other words, the first node may obtain information about an association (namely, the first association) between the second node and a device in advance. In this way, when the second node is faulty, the first node can quickly determine a device and an association (that is, the host and the first association) affected by a fault of the second node, and notify the host of information about the change of the association status.

Optionally, a signal cable may be connected between the first node and the second node, and the first node can obtain a status of the second node through the signal cable, in other words, determine whether a current status of the second node is normal or faulty. In other words, when the second node is faulty, the first node can learn in real time that, through the signal cable between the first node and the second node, the second node is faulty, and then is triggered to notify the host that the association status of the host changes. Alternatively, if deployed with an emergency mechanism, the second node may send a fault notification message to the first node when the second node is faulty, to describe that the second node is faulty. In conclusion, a manner in which the first node learns that the second node is faulty is not limited in this embodiment.

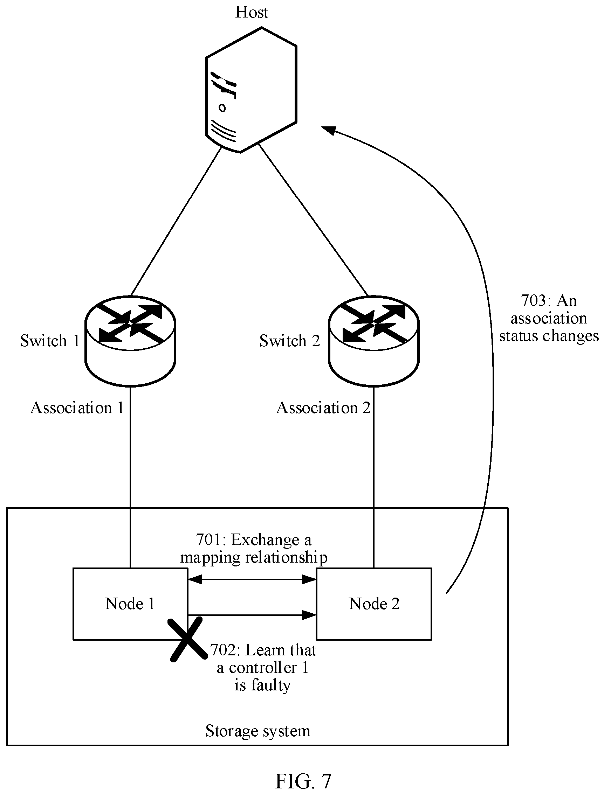

For example, FIG. 7 is another schematic flowchart of fault notification according to an embodiment of this application. As shown in FIG. 7, a storage system includes a node 1 and a node 2, and the node 1 establishes an association with a host via a switch 1. The node 2 establishes an association with the host via a switch 2. An association 1 for establishing the association with the host by the node 1 via the switch 1 is faulty, and an association 2 for establishing the association with the host by the node 2 via the switch 2 is normal. A fault notification procedure shown in FIG. 7 includes the following steps 701 to 705.

Compared with the embodiments described in FIG. 2 to FIG. 6, the embodiment described in FIG. 7 differs in that the host accesses the node 1 and the node 2, and the node 2 perceives that the node 1 is faulty. Therefore, the node 2 notifies the host through a normal association.

Step 701: The node 1 and the node 2 exchange a mapping relationship with each other. Specifically, logic controllers between the node 1 and the node 2 may exchange a mapping relationship with each other.

Specifically, the node 1 sends a recorded mapping relationship between the node 1, the host, and the association to the node 2, and the node 2 also sends a recorded mapping relationship between the node 2, the host, and the association to the node 1. That is, the node 1 and the node 2 separately notify each other of the association established between the node 1 and the host and the association established between the node 2 and the host. For example, in FIG. 7, the node 1 sends a mapping relationship between the node 1, the host, and the association 1 to the node 2, and the node 2 sends a mapping relationship between the node 2, the host, and the association 2 to the node 1.

In this way, after any node is faulty, the other node can determine an affected host and association based on the mapping relationship exchanged in advance.

Step 702: The node 2 learns that the node 1 is faulty.

For example, a signal cable may be connected between the node 1 and the node 2, and the node 2 learns, through the signal cable, that the node 1 is faulty. Alternatively, if deployed with an emergency mechanism, the node 1 may send a fault notification message to the node 2 when the node 1 is faulty, to describe that the node 2 is faulty.

Step 703: The node 2 separately sends a first notification message to the host through the association 2, to notify the host that an association status of the host changes.

Specifically, a first logic controller in the node 2 may send the first notification message to the host.

Step 704: After receiving the first notification message, the host sends a first request message to the node 2 through the association 2, to request to obtain the status of the association between the host and the storage system.

Step 705: The node 2 sends a first response message to the host through the association 2, to describe the status of the association 1.

In this embodiment, steps 703 to 705 are similar to the foregoing steps 402 to 404. For details, refer to the foregoing steps 402 to 404. Details are not described herein again.

For ease of drawing, steps 704 and 705 are not shown in FIG. 7.

In the embodiment shown in FIG. 7, it is described that when an association between one node and one host is faulty, another node notifies the host of the association status. In some embodiments, one node may be associated with a plurality of hosts. As a result, when the node is faulty, associations between the node and the plurality of hosts may all be faulty. In this case, another node needs to notify the hosts that association statuses change.

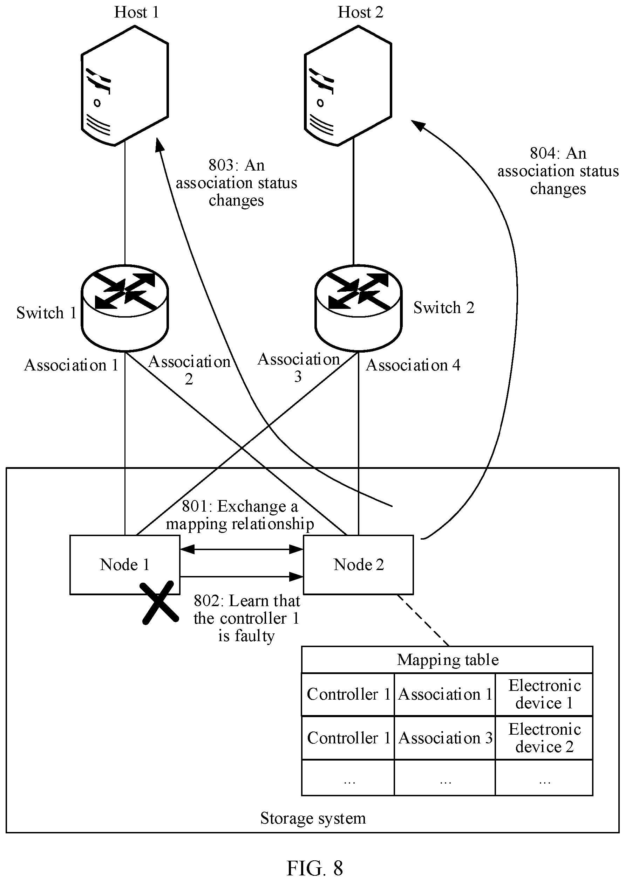

For example, FIG. 8 is another schematic flowchart of fault notification according to an embodiment of this application. As shown in FIG. 8, a storage system includes a node 1 and a node 2. The node 1 is associated with a host 1 via a switch 1, and the node 1 is associated with a host 2 via a switch 2. The node 2 is associated with the host 1 via the switch 1, and the node 2 is associated with the host 2 via the switch 2. The node 1 is faulty. As a result, an association 1 for establishing an association with the host 1 by the node 1 via the switch 1 and an association 3 for establishing an association with the host 2 by the node 1 via the switch 2 are faulty. An association 3 for establishing an association with the host 1 by the node 2 via the switch 1 and an association 4 for establishing an association with the host 2 by the node 2 via the switch 2 are faulty. A fault notification procedure shown in FIG. 8 includes the following steps 801 to 804.

Compared with the embodiments described in FIG. 2 to FIG. 7, the embodiment described in FIG. 8 differs in that the host 1 and the host 2 both access the node 1 and the node 2, and the node 2 perceives that the node 1 is faulty. Therefore, the node 2 notifies the host 1 and the host 2 through a normal association.

Step 801: The node 1 and the node 2 exchange a mapping relationship with each other.

For example, in FIG. 8, the node 1 sends, to the node 2, a mapping relationship between the node 1, the host 1, and the association 1, and a mapping relationship between the node 1, the host 2, and the association 3. The node 2 sends, to the node 1, a mapping relationship between the node 2, the host 1, and the association 2, and a mapping relationship between the node 2, the host 2, and the association 4.

In this way, the node 2 can establish a mapping table based on the mapping relationships sent by the node 1. The mapping table records the associations between the node 1 and the hosts (namely, the host 1 and the host 2).

Step 802: The node 2 learns that the node 1 is faulty.

Step 803: The node 2 sends a notification message 1 to the host 1 through the association 2.

The notification message 1 is, for example, the foregoing first notification message. The notification message 1 is used to describe that a status of an association between the host 1 and the storage system changes.

Step 804: The node 2 sends a notification message 2 to a host 3 through the association 4.

The notification message 2 is, for example, the foregoing first notification message. The notification message 2 is used to describe that a status of an association between the host 2 and the storage system changes.

In this way, after separately receiving the notification message sent by the node 2, the host 1 and the host 2 may separately send a request message to the node 2, to request to obtain the association status. The node 2 may send a response message 1 to the host 1, to describe that the association 1 between the host 1 and the node 1 is faulty. The node 2 may further send a response message 2 to the host 2, to describe that the association 3 between the host 2 and the node 1 is faulty.

In general, when the node 1 is faulty, the node 2 may separately notify the hosts associated with the node 1, to describe that the associations between the hosts and the node 1 are faulty, so that the hosts switch the communication associations.

The foregoing describes the method provided in embodiments of this application. For ease of understanding, the following describes an apparatus configured to perform the method in the foregoing embodiments.

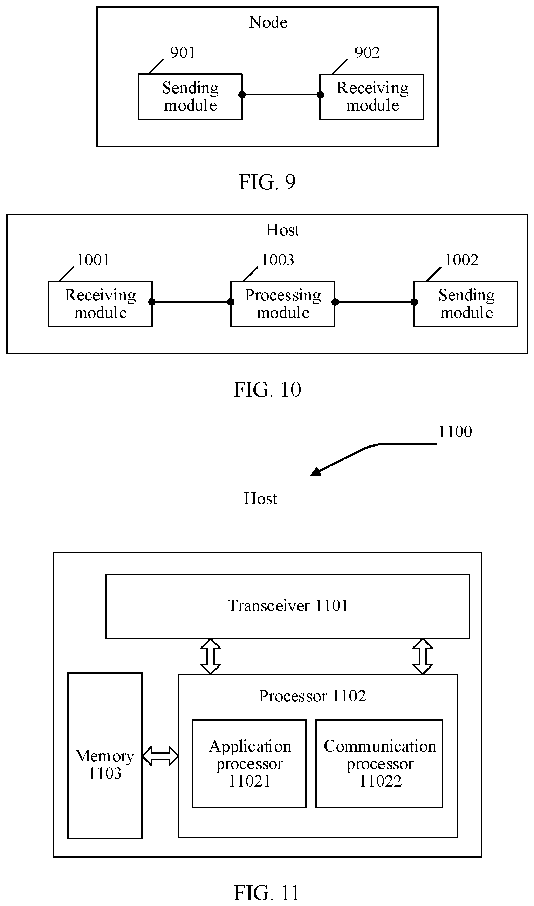

FIG. 9 is a diagram of a structure of a node according to an embodiment of this application. As shown in FIG. 9, the node is a first node in a storage system, and includes:
a sending module 901, configured to send, when a first association between a host and the storage system is faulty, a first notification message to the host through a second association, where the second association is an association between the first node and the host, and the first notification message is used to describe that a status of an association between the host and the storage system changes; and
a receiving module 902, configured to receive a first request message sent by the host in response to the first notification message, where the first request message is used to request to obtain a faulty association between the host and the storage system, where
the sending module 901 is further configured to send a first response message to the host, where the first response message is used to describe that the first association is in a faulty state.

In a possible implementation, the first notification message is an asynchronous event request command completion message, and the asynchronous event request command completion message is used to describe, based on a reserved field value, that the status of the association between the host and the storage system changes.

In a possible implementation, the first request message includes a get log page command, and the get log page command is used to request to obtain a log page that records a status of an association between the host and the storage system.

The first response message includes a first log page, and the first log page is used to describe that the first association is in a faulty state.

In a possible implementation, the first association is an association between the host and a second node in the storage system. The receiving module 902 is further configured to receive a second notification message from the second node, where the second notification message is used to describe that the first association is in a faulty state.

In a possible implementation, the second notification message is further used to describe a mapping relationship between the first association and the host. The sending module 901 is further configured to send, through the second association, the first notification message to the host indicated by the mapping relationship.

In a possible implementation, the first association is an association between the host and a second node in the storage system. When the first node learns that the second node is in a faulty state, the sending module 901 is further configured to send the first notification message to the host based on a first mapping relationship through the second association, where the first mapping relationship is used to describe a mapping relationship between the second node, the first association, and the host.

In a possible implementation, the receiving module 902 is further configured to receive the first mapping relationship sent by the second node.

In a possible implementation, the first association is an association between the host and the first node, and the host is associated with the first node separately through the first association and the second association.

In a possible implementation, each association between the host and the storage system corresponds to a logic controller in a node in the storage system.

In a possible implementation, an association between the storage system and the host is based on an NVMe specification.

FIG. 10 is a diagram of a structure of a host according to an embodiment of this application. As shown in FIG. 10, the host includes a receiving module 1001, a sending module 1002, and a processing module 1003.

The receiving module 1001 is configured to: when a first association between the host and a storage system is faulty, receive, through a second association between the host and a first node in the storage system, a first notification message sent by the first node, where the first notification message is used to describe that a status of the association through which the host accesses the storage system changes.

The sending module 1002 is configured to send a first request message to the first node, where the first request message is used to request to obtain the status of the association through which the host accesses the storage system.

The receiving module 1001 is further configured to receive a first response message sent by the first node.

The processing module 1003 is configured to: when the first response message is used to describe that the first association through which the host accesses the storage system is in a faulty state, switch the association for communication with the storage system.

In a possible implementation, the first notification message is an asynchronous event request command completion message, and the asynchronous event request command completion message is used to describe, based on a reserved field value, that the status of the association between the host and the storage system changes.

In a possible implementation, the first request message includes a get log page command, and the get log page command is used to request to obtain a log page that records a status of an association between the host and the storage system. The first response message includes a first log page, and the first log page is used to describe that the first association is in a faulty state.

In a possible implementation, the first association is an association between the host and a second node in the storage system.

In a possible implementation, the first association is an association between the host and the first node, and the host is associated with the first node separately through the first association and the second association.

In a possible implementation, each association between the host and the storage system corresponds to a logic controller in a node in the storage system.

In a possible implementation, an association between the storage system and the host is based on an NVMe specification.

The following describes a host according to an embodiment of this application. FIG. 11 is a diagram of a structure of the host according to an embodiment of this application. The host 1100 may be specifically a personal computer, a notebook computer, a server, or the like. This is not limited herein. Specifically, the host 1100 includes a transceiver 1101, a processor 1102, and a memory 1103 (there may be one or more processors 1102 in the host 1100, and one processor is used as an example in FIG. 11). The processor 1102 may include an application processor 11021 and a communication processor 11022. In some embodiments of this application, the transceiver 1101, the processor 1102, and the memory 1103 may be connected through a bus or in another manner.

The memory 1103 may include a read-only memory and a random access memory, and provides instructions and data to the processor 1102. A part of the memory 1103 may further include a non-volatile random access memory (non-volatile random access memory, NVRAM). The memory 1103 stores a processor and operation instructions, an executable module or a data structure, a subset thereof, or an extension set thereof. The operation instructions may include various operation instructions for implementing various operations.

The processor 1102 controls an operation of the host. In specific application, components of the host are coupled together by using a bus system. In addition to a data bus, the bus system may further include a power bus, a control bus, a status signal bus, and the like. However, for clear description, various types of buses in the figure are referred to as the bus system.

The foregoing method disclosed in embodiments of this application may be applied to the processor 1102, or may be implemented by the processor 1102. The processor 1102 may be an integrated circuit chip, and has a signal processing capability. During implementation, steps of the foregoing methods may be completed by using a hardware integrated logic circuit in the processor 1102 or instructions in a form of software. The processor 1102 may be a general-purpose processor, a digital signal processor (digital signal processor, DSP), a microprocessor or a microcontroller. The processor 1102 may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1102 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory 1103, and the processor 1102 reads information from the memory 1103 and completes the steps in the foregoing methods in combination with the hardware of the processor 1102.

The transceiver 1101 (for example, a network interface card) may be configured to: receive input digital or character information, and generate a signal input related to a related setting and function control of the host. The transceiver 1101 may be further configured to: output digital or character information through a first interface, and send instructions to a disk group through the first interface, to modify data in the disk group. The transceiver 1101 may further include a display device like a display screen.

In this embodiment of this application, in one case, the processor 1102 is configured to perform the method performed by the first node or the host in the embodiment corresponding to FIG. 2.

The host provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the host performs the model hyperparameter selection method described in the foregoing embodiments, or a chip in a training device performs the model hyperparameter selection method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

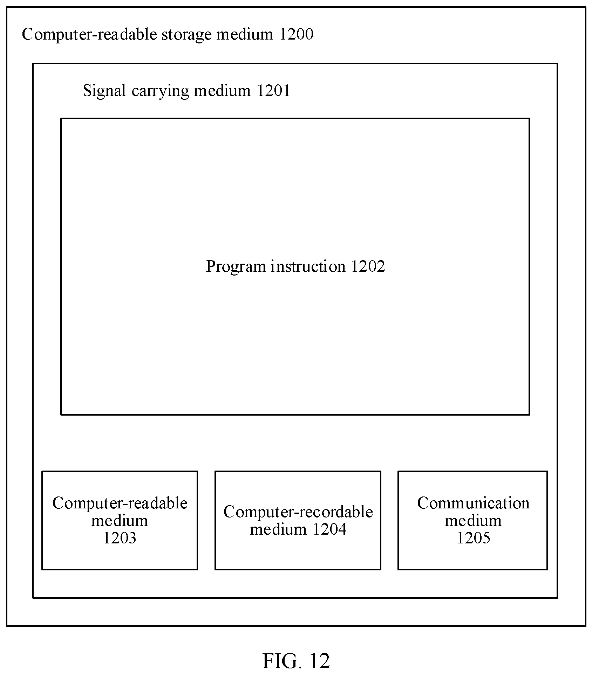

FIG. 12 is a diagram of a structure of a computer-readable storage medium according to an embodiment of this application. This application further provides a computer-readable storage medium. In some embodiments, the method disclosed in FIG. 2 may be implemented as computer program instructions encoded on the computer-readable storage medium or encoded on another non-transitory medium or product in a machine-readable format.

FIG. 12 schematically shows a conceptual partial view of an example computer-readable storage medium arranged according to at least some embodiments shown herein, including a computer program for executing a computer process on a computing device.

In an embodiment, the computer-readable storage medium 1200 is provided by using a signal carrying medium 1201. The signal carrying medium 1201 may include one or more program instructions 1202, and when the one or more program instructions 1202 are run by one or more processors, the foregoing functions or some functions described for FIG. 2 may be provided. In addition, the program instruction 1202 in FIG. 12 alternatively describes an example instruction.

In some examples, the signal carrying medium 1201 may include a computer-readable medium 1203, for example, but not limited to, a hard disk drive, a compact disc (CD), a digital video disc (DVD), a digital tape, a memory, a ROM, or a RAM.

In some implementations, the signal carrying medium 1201 may include a computer-recordable medium 1204, for example, but not limited to, a memory, a read/write (R/W) CD, an R/W DVD, and the like. In some implementations, the signal carrying medium 1201 may include a communication medium 1205, for example, but not limited to, a digital and/or analog communication medium (for example, an optical fiber cable, a waveguide, a wired communication link, or a wireless communication link). Therefore, for example, the signal carrying medium 1201 may be communicated by a wireless communication medium 1205 (for example, a wireless communication medium that complies with the IEEE 802.12 standard or another transmission protocol).

The one or more program instructions 1202 may be, for example, computer-executable instructions or logic implementation instructions. In some examples, a computing device may be configured to provide various operations, functions, or actions in response to the program instructions 1202 transmitted to the computing device by using one or more of the computer-readable medium 1203, the computer-recordable medium 1204, and/or the communication medium 1205.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, association relationships between modules indicate that the modules have communication associations with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (Solid State Drive, SSD)), or the like.

## Claims

1. A fault notification method, comprising:
sending, by a first node in a storage system when a first association between a host and the storage system is faulty, a first notification message to the host through a second association, wherein the second association is an association between the first node and the host, and the first notification message is used to describe that a status of an association between the host and the storage system changes;
receiving, by the first node, a first request message sent by the host in response to the first notification message, wherein the first request message is used to request to obtain a description about a faulty association between the host and the storage system; and
sending, by the first node, a first response message to the host, wherein the first response message is used to describe that the first association is in a faulty state.

2. The method according to claim 1, wherein the first notification message is an asynchronous event request command completion message Asynchronous Event Request command Completion, and the asynchronous event request command completion message is used to describe, based on a reserved field value, that the status of the association between the host and the storage system changes.

3. The method according to claim 1 or 2, wherein the first request message comprises a get log page command, and the get log page command is used to request to obtain a log page that records a status of an association between the host and the storage system; and
the first response message comprises a first log page, and the first log page is used to describe that the first association is in a faulty state.

4. The method according to any one of claims 1 to 3, wherein the first association is an association between the host and a second node in the storage system; and
before the sending, by a first node, a first notification message to the host through a second association, the method further comprises:
receiving, by the first node, a second notification message from the second node, wherein the second notification message is used to describe that the first association is in a faulty state.

5. The method according to claim 4, wherein the second notification message is further used to describe a mapping relationship between the first association and the host; and
the sending, by a first node, a first notification message to the host through a second association comprises:
sending, by the first node through the second association, the first notification message to the host indicated by the mapping relationship.

6. The method according to any one of claims 1 to 3, wherein the first association is an association between the host and a second node in the storage system; and
the sending, by a first node in a storage system when a first association between a host and the storage system is faulty, a first notification message to the host through a second association comprises:
sending, by the first node when learning that the second node is in a faulty state, the first notification message to the host based on a first mapping relationship through the second association, wherein
the first mapping relationship is used to describe a mapping relationship between the second node, the first association, and the host.

7. The method according to claim 6, wherein before the sending, by a first node, a first notification message to the host through a second association, the method further comprises:
receiving, by the first node, the first mapping relationship sent by the second node.

8. The method according to any one of claims 1 to 3, wherein the first association is an association between the host and the first node, and the host is associated with the first node separately through the first association and the second association.

9. The method according to any one of claims 1 to 8, wherein each association between the host and the storage system corresponds to a logic controller in a node in the storage system.

10. The method according to any one of claims 1 to 9, wherein an association between the storage system and the host is based on a non-volatile memory express NVMe specification.

11. The method according to any one of claims 1 to 10, wherein when the first association between the host and the storage system is faulty, the host receives, through the second association between the host and the first node, the first notification message sent by the first node, wherein the first notification message is used to describe that the status of the association between the host and the storage system changes;
the host sends the first request message to the first node, wherein the first request message is used to request to obtain the status of the association through which the host accesses the storage system;
the host receives the first response message sent by the first node; and
when the first response message is used to describe that the first association through which the host accesses the storage system is in a faulty state, the host switches the association for communication with the storage system.

12. A fault notification method, comprising:
when a first association between a host and a storage system is faulty, receiving, by the host through a second association between the host and a first node in the storage system, a first notification message sent by the first node, wherein the first notification message is used to describe that a status of an association between the host and the storage system changes;
sending, by the host, a first request message to the first node, wherein the first request message is used to request to obtain the status of the association through which the host accesses the storage system;
receiving, by the host, a first response message sent by the first node; and
when the first response message is used to describe that the first association through which the host accesses the storage system is in a faulty state, switching, by the host, the association for communication with the storage system.

13. The method according to claim 12, wherein the first notification message is an asynchronous event request command completion message, and the asynchronous event request command completion message is used to describe, based on a reserved field value, that the status of the association between the host and the storage system changes.

14. The method according to claim 12 or 13, wherein the first request message comprises a get log page command, and the get log page command is used to request to obtain a log page that records a status of an association between the host and the storage system; and
the first response message comprises a first log page, and the first log page is used to describe that the first association is in a faulty state.

15. The method according to any one of claims 12 to 14, wherein
the first association is an association between the host and a second node in the storage system; or
the first association is an association between the host and the first node, and the host is associated with the first node separately through the first association and the second association.

16. The method according to any one of claims 12 to 15, wherein an association between the storage system and the host is based on an NVMe specification.

17. A node, wherein the node is a first node in a storage system, and comprises:
a sending module, configured to send, when a first association between a host and the storage system is faulty, a first notification message to the host through a second association, wherein the second association is an association between the first node and the host, and the first notification message is used to describe that a status of an association between the host and the storage system changes; and
a receiving module, configured to receive a first request message sent by the host in response to the first notification message, wherein the first request message is used to request to obtain a faulty association between the host and the storage system, wherein
the sending module is further configured to send a first response message to the host, wherein the first response message is used to describe that the first association is in a faulty state.

18. The node according to claim 17, wherein the first notification message is an asynchronous event request command completion message, and the asynchronous event request command completion message is used to describe, based on a reserved field value, that the status of the association through which the host accesses the storage system changes.

19. The node according to claim 17 or 18, wherein the first request message comprises a get log page command, and the get log page command is used to request to obtain a log page that records a status of an association between the host and the storage system; and
the first response message comprises a first log page, and the first log page is used to describe that the first association is in a faulty state.

20. The node according to any one of claims 17 to 19, wherein the first association is an association between the host and a second node in the storage system; and
the receiving module is further configured to receive a second notification message from the second node, wherein the second notification message is used to describe that the first association is in a faulty state.

21. The node according to claim 20, wherein the second notification message is further used to describe a mapping relationship between the first association and the host; and
the sending module is further configured to send, through the second association, the first notification message to the host indicated by the mapping relationship.

22. The node according to any one of claims 17 to 19, wherein the first association is an association between the host and a second node in the storage system; and
the sending module is further configured to send, when the first node learns that the second node is in a faulty state, the first notification message to the host based on a first mapping relationship through the second association, wherein
the first mapping relationship is used to describe a mapping relationship between the second node, the first association, and the host; or
the first association is an association between the host and the first node, and the host is associated with the first node separately through the first association and the second association.

23. The node according to any one of claims 17 to 22, wherein an association between the storage system and the host is based on an NVMe specification.

24. A host, comprising:
a receiving module, configured to: when a first association between the host and a storage system is faulty, receive, through a second association between the host and a first node in the storage system, a first notification message sent by the first node, wherein the first notification message is used to describe that a status of the association through which the host accesses the storage system changes;
a sending module, configured to send a first request message to the first node, wherein the first request message is used to request to obtain the status of the association through which the host accesses the storage system, wherein
the receiving module is further configured to receive a first response message sent by the first node; and
a processing module, configured to: when the first response message is used to describe that the first association through which the host accesses the storage system is in a faulty state, switch the association for communication with the storage system.

25. The host according to claim 24, wherein the first notification message is an asynchronous event request command completion message, and the asynchronous event request command completion message is used to describe, based on a reserved field value, that the status of the association between the host and the storage system changes.

26. The host according to claim 24 or 25, wherein the first request message comprises a get log page command, and the get log page command is used to request to obtain a log page that records the status of the association through which the host accesses the storage system; and
the first response message comprises a first log page, and the first log page is used to describe that the first association is in a faulty state.

27. The host according to any one of claims 24 to 26, wherein the first association is an association between the host and a second node in the storage system; or
the first association is an association between the host and the first node, and the host is associated with the first node separately through the first association and the second association.

28. The host according to any one of claims 24 to 27, wherein an association between the storage system and the host is based on an NVMe specification.

29. A storage device, comprising a storage medium and a processor, wherein the storage medium stores code, the processor is configured to execute the code, and when the code is executed, the storage device performs the method according to any one of claims 1 to 16.

30. A storage system, comprising a plurality of nodes according to any one of claims 17 to 23.

31. A fault notification system, comprising the node according to any one of claims 17 to 23 and the host according to any one of claims 24 to 28.

32. A computer storage medium, wherein the computer storage medium stores instructions, and when the instructions are executed by a computer, the computer is enabled to implement the method according to any one of claims 1 to 16.

33. A computer program product, wherein the computer program product stores instructions, and when the instructions are executed by a computer, the computer is enabled to implement the method according to any one of claims 1 to 16.
